# EUROPEAN PATENT SPECIFICATION

(11) **EP 4 375 916 B1**
(45) Date of publication and mention of the grant of the patent: **29.10.2025**
(21) Application number: 22845960.8
(22) Date of filing: 20.07.2022
(51) Int. Cl.: G06Q 10/04, G06Q 50/10, F24F 11/52, F24F 11/54, F24F 11/63

(54) **AREA NOTIFICATION SYSTEM**
GEBIETSBENACHRICHTIGUNGSSYSTEM
SYSTÈME DE NOTIFICATION DE ZONE

(30) Priority: 21.07.2021 JP 2021120816
(43) Date of publication of application: 29.05.2024
(73) Proprietor: Daikin Industries, Ltd., Osaka-shi, Osaka 530-0001 (JP)
(72) Inventor: MAEDA, Chikara, Osaka-shi, Osaka 530-0001 (JP)
(74) Representative: Conti, Marco
(86) International application number: PCT/JP2022/028258
(87) International publication number: WO 2023/003027

(56) References cited:
- WO-A1-2017/149748
- WO-A1-2020/218563
- JP-A- 2011 165 122
- JP-A- 2011 187 030
- JP-A- 2021 057 008
- US-A1- 2019 338 974
- US-B1- 10 225 707

## Description

### TECHNICAL FIELD

The present disclosure relates to an area notification system.

### BACKGROUND ART

As described in Patent Document 1 (JP 2013-246702 A), there is known a system that determines a workplace to be used by a tenant of a building so as to reduce energy consumption of building facilities. US 2019/338974 discloses a building control system with automatic comfort constraint generation. US 10 225 707 B1 discloses a space guidance and management system.

### SUMMARY OF THE INVENTION

### <Technical Problem>

With a conventional system, the optimization of the overall operation efficiency of an air conditioning system installed over a plurality of areas and having a plurality of utilization units may be insufficient.

### <Solution to Problem>

Aim of the present invention is to provide an area notification system which improves the state of the art indicated above. This aim is achieved by the area notification system, according to the corresponding appended claims.

An area notification system according to a first aspect notifies a user of a facility, of a first area to be used by the user among a plurality of areas in the facility. In the facility, air conditioning is performed over the plurality of areas using a first air conditioning system in which a plurality of utilization units are connected to one heat source unit. The area notification system includes a control unit that generates information on the first area in the facility. The control unit performs the following steps (A) to (C).
(A) A plurality of patterns of operation information of the first air conditioning system acquired when the plurality of utilization units are used in the plurality of areas in a first period and power consumption of the first air conditioning system in the first period are learned in association with each other.
(B) Based on a result of the learning, from the plurality of patterns of operation information of the first air conditioning system acquired when the plurality of utilization units are used in the plurality of areas in a second period, the power consumption of the first air conditioning system in the second period is inferred for each of the plurality of patterns.
(C) Based on a comparison among results of the inference for the plurality of respective patterns, information on the first area is generated so that power consumption of the first air conditioning system is reduced.

This area notification system can optimize the overall operation efficiency of the air conditioning system that performs air conditioning over the plurality of areas.

An area notification system according to a second aspect is the area notification system according to the first aspect, in which the operation information includes information on use of the plurality of areas.

This area notification system can optimize the selection of the area to be used by the user.

An area notification system according to a third aspect is the area notification system according to the second aspect, in which the operation information further includes information on operation data of the first air conditioning system.

This area notification system can optimize the selection of the area to be used by the user.

An area notification system according to a fourth aspect is the area notification system according to any one of the first to the third aspects, in which the control unit further learns information on an environment of the plurality of areas in the first period and the power consumption of the first air conditioning system in the first period in association with each other.

This area notification system improves the accuracy of learning in which the operation pattern of the air conditioning system and the power consumption of the air conditioning system are associated with each other.

An area notification system according to a fifth aspect is the area notification system according to any one of the first to the fourth aspects, in which the control unit further learns information on the facility and the power consumption of the first air conditioning system in the first period in association with each other.

This area notification system improves the accuracy of learning in which the operation pattern of the air conditioning system and the power consumption of the air conditioning system are associated with each other.

An area notification system according to a sixth aspect is the area notification system according to any one of the first to the fifth aspects, in which the control unit calculates a reward based on the power consumption of the first air conditioning system in the first period, and learns the power consumption of the first air conditioning system in the first period based on the calculated reward.

This area notification system improves the accuracy of learning in which the operation pattern of the air conditioning system and the power consumption of the air conditioning system are associated with each other.

An area notification system according to a seventh aspect notifies a user of a facility, of a first area to be used by the user among a plurality of areas in the facility. In the facility, air conditioning is performed over the plurality of areas using a first air conditioning system in which a plurality of utilization units are connected to one heat source unit. The area notification system includes a control unit that generates information on the first area in the facility. The control unit performs the following steps (A) to (C).
(A) A plurality of patterns of operation information of the first air conditioning system acquired when the plurality of utilization units are used in the plurality of areas in a first period and information on suitability of use of an area included in the plurality of areas in the first period are learned in association with each other.
(B) Based on a result of the learning, from the plurality of patterns of operation information of the first air conditioning system acquired when the plurality of utilization units are used in the plurality of areas in a second period, information on suitability of use of an area included in the plurality of areas in the second period is inferred for each of the plurality of patterns.
(C) Based on a comparison among results of the inference for the plurality of respective patterns, information on the first area including the most appropriate area among the plurality of areas is generated.

This area notification system can optimize the overall operation efficiency of the air conditioning system that performs air conditioning over the plurality of areas.

An area notification system according to an eighth aspect is the area notification system according to the seventh aspect, in which the operation information includes information on use of the plurality of areas.

This area notification system can optimize the selection of the area to be used by the user.

An area notification system according to a ninth aspect is the area notification system according to the eighth aspect, in which the operation information further includes information on operation data of the first air conditioning system.

This area notification system can optimize the selection of the area to be used by the user.

An area notification system according to a tenth aspect is the area notification system according to any one of the seventh to the ninth aspects, in which the control unit further learns the power consumption of the first air conditioning system in the first period and information on suitability of use of the first area in the first period in association with each other.

This area notification system improves the accuracy of learning in which the operation pattern of the air conditioning system and the power consumption of the air conditioning system are associated with each other.

An area notification system of an eleventh aspect is the area notification system according to any one of the seventh to the tenth aspects, in which the control unit further learns determination information for determining the suitability of use of the first area in the first period and the information on the suitability of use of the first area in the first period in association with each other.

This area notification system improves the accuracy of learning in which the operation pattern of the air conditioning system and the power consumption of the air conditioning system are associated with each other.

An area notification system according to a twelfth aspect is the area notification system according to the eleventh aspect, in which the determination information includes economic efficiency information, comfort information, or convenience information. The economic efficiency information includes information on an operation cost of the first air conditioning system. The comfort information includes information on an environment of the plurality of areas, or information on a tolerable range of the user regarding the environment of the plurality of areas. The convenience information includes information on the use of the plurality of areas or information on a tolerable range of the user regarding the use of the plurality of areas.

This area notification system improves the accuracy of learning in which the operation pattern of the air conditioning system and the power consumption of the air conditioning system are associated with each other.

### BRIEF DESCRIPTION OF THE DRAWINGS

Fig. 1 is a schematic configuration diagram of an air conditioning management system 190 using an area notification system 100.
Fig. 2 is a diagram illustrating an example of a use situation of a facility 10 according to a first embodiment.
Fig. 3 is a flowchart of a process performed by the area notification system 100 according to the first embodiment.
Fig. 4 is a block diagram of a control unit 110 during learning according to the first embodiment and a second embodiment.
Fig. 5 is a block diagram of the control unit 110 after the learning according to the first and the second embodiments.
Fig. 6 is a block diagram of a machine learning device 200 during learning according to Modification C.
Fig. 7 is a block diagram of the machine learning device 200 after the learning according to Modification C.
Fig. 8 is a flowchart of a process performed by an area notification system 100 according to the second embodiment.
Fig. 9 is a diagram illustrating an example of a use situation of the facility 10 according to Modification G.
Fig. 10 is a diagram illustrating an example of a use situation of the facility 10 according to Modification H.

### DESCRIPTION OF EMBODIMENTS

### -First embodiment-

### (1) Overall configuration of area notification system 100

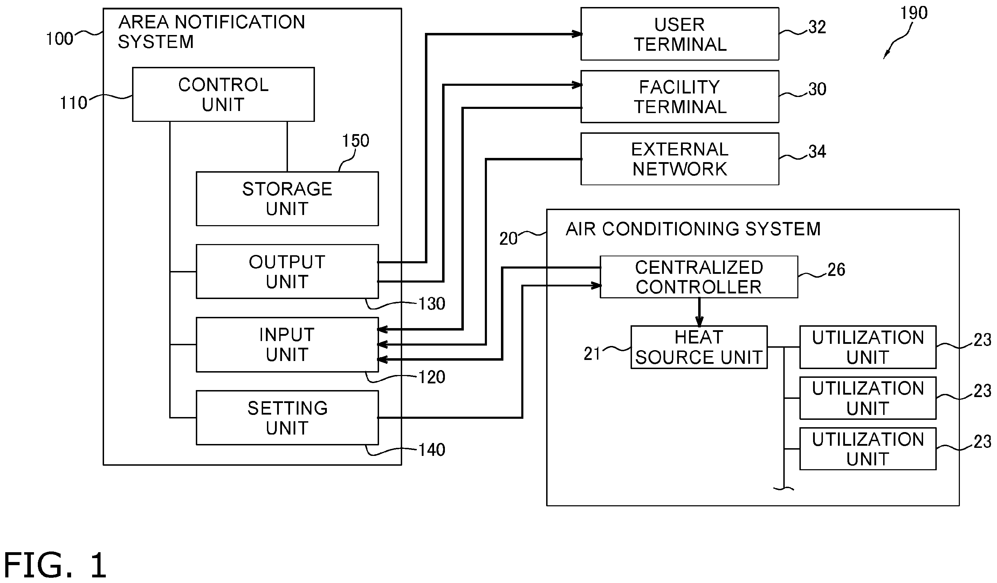

An area notification system 100 of the present embodiment notifies a user U of a facility 10, of an area A to be used by the user U among a plurality of areas A in the facility 10. As illustrated in Fig. 1, the area notification system 100 is used in, for example, an air conditioning management system 190. The air conditioning management system 190 mainly includes the area notification system 100 and one or a plurality of air conditioning systems 20. In the present embodiment, the air conditioning management system 190 includes one air conditioning system 20.

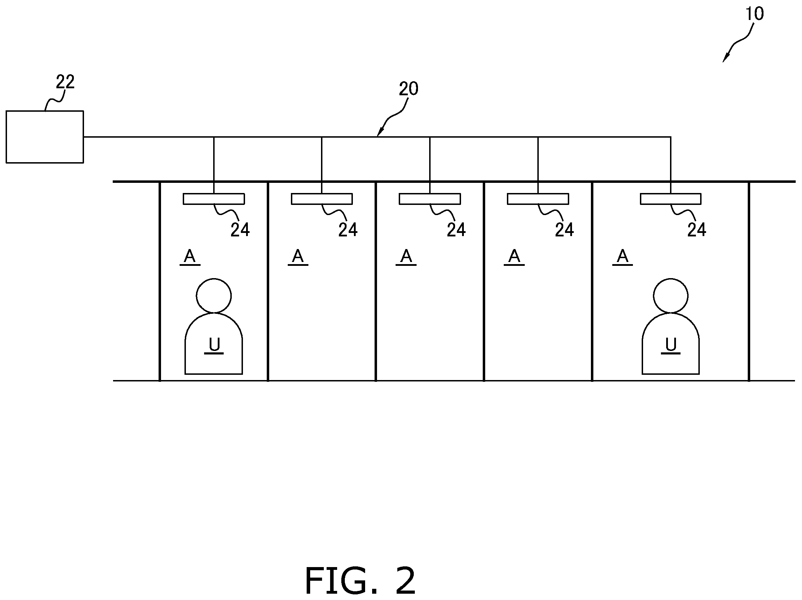

In the facility 10, as illustrated in Fig. 2, one air conditioning system 20 for adjusting air environments (temperature, humidity, air volume, and the like) of the plurality of areas A is installed. The air conditioning system 20 mainly includes a heat source unit 21, utilization units 23, and a centralized controller 26. The air conditioning system 20 includes one refrigeration cycle (refrigerant system) in which a plurality of the utilization units 23 are connected to one heat source unit 21. Therefore, in the present embodiment, one refrigerant system is installed in the facility 10. In the present embodiment, as illustrated in Fig. 2, the heat source unit 21 is an outdoor unit 22, and the utilization units 23 are indoor units 24.

The air conditioning system 20 is a multi-air conditioning system in which the centralized controller 26 can control the plurality of utilization units 23 using one heat source unit 21. The heat source unit 21 includes a compressor that compresses the refrigerant circulating in the refrigeration cycle of the air conditioning system 20. The area notification system 100 is connected to the centralized controller 26 of the air conditioning system 20.

The facility 10 is a building or a part of a building in which an air environment of an internal space is adjusted by the air conditioning system 20. The facility 10 is, for example, an office, a hospital, a hotel, a school, a large-scale store, a research facility, or a restaurant that occupies a part or the whole of a building. The air conditioning system 20 performs air conditioning of the facility 10 over a plurality of areas A in the facility 10.

One utilization unit 23 is installed in each area A in the facility 10. The area A in the facility 10 may be a space partitioned from other areas A by a wall or the like. For example, the area A may be a relatively small room (such as a conference room) in the facility 10. In this case, one utilization unit 23 is installed in a room including only one area A.

Further, a plurality of areas A in the facility 10 may be included in the same space. In the space including the plurality of areas A, the areas A are arranged so as not to overlap each other. For example, the space including the plurality of areas A may be a relatively large room (such as a lobby) in the facility 10. In this case, the plurality of utilization units 23, the number of which is the same as the number of areas A, are installed in the room including the plurality of areas A.

The area notification system 100 is used for a guide (or a manager) of the facility 10 to guide the user U to one predetermined area A. The area notification system 100 provides information on the area A to be used by the user U of the facility 10, to the guide of the facility 10, and the guide guides the user U to the predetermined area A based on the information. In this case, the guide of the facility 10 guides the user U visiting the facility 10 to the predetermined area A, or guides the user U who has used the predetermined area A to another area A. The user U may be one person or may be a group including a plurality of persons.

As illustrated in Fig. 1, the area notification system 100 mainly includes a control unit 110, an input unit 120, an output unit 130, a setting unit 140, and a storage unit 150.

The control unit 110 is hardware that executes calculation processing for realizing various functions of the area notification system 100. The control unit 110 realizes these functions by executing a predetermined program using predetermined data. The control unit 110 is, for example, an integrated circuit such as a CPU, an ASI, and an FPGA. The control unit 110 executes a process for determining a method of using the facility 10. The method of using the facility 10 is, for example, information on the area A to be used by the user U of the facility 10 and information on the control of the air conditioning system 20. The information on the control of the air conditioning system 20 includes operation information of the plurality of utilization units 23 of the air conditioning system 20. The operation information is, for example, information on the utilization unit 23 to be operated among the plurality of utilization units 23, and information on a set temperature, a set humidity, a set air volume, and the like of the utilization unit 23 installed in each area A.

The input unit 120 is hardware for inputting information used by the control unit 110 to determine the method of using the facility 10. The input unit 120 is a network device for communicating with a facility terminal 30 and the like. The facility terminal 30 is a PC, a portable terminal, or the like that is owned by the facility 10 and is used for business by a guide, a manager, or the like of the facility 10.

The output unit 130 is hardware for outputting information included in the method of using the facility 10 determined by the control unit 110. The output unit 130 is a network device for communicating with the facility terminal 30 and the like.

The setting unit 140 is hardware for outputting information included in the method of using the facility 10 determined by the control unit 110 and transmitting the information to the centralized controller 26 of the air conditioning system 20. The setting unit 140 is, for example, a network device for communicating with the centralized controller 26 of the air conditioning system 20.

The storage unit 150 is hardware that stores a program executed by the control unit 110 and data used by the control unit 110 to determine the method of using the facility 10. The storage unit 150 is, for example, an auxiliary storage device (such as a RAM, an HDD, and an SSD) for storing data input by the input unit 120 and data output by the output unit 130 and the setting unit 140.

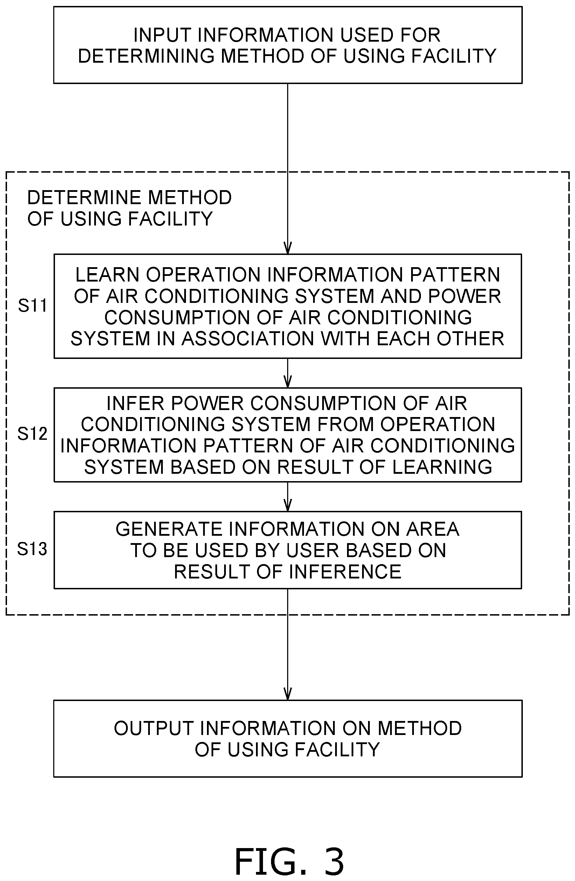

As illustrated in Fig. 3, the area notification system 100 causes the control unit 110 to determine the method of using the facility 10 using various kinds of information input to the input unit 120 from the outside, and outputs information included in the method of using the facility 10 to the outside via the output unit 130 and the setting unit 140. The area notification system 100 permanently or temporarily stores a program and data used in the series of processes in the storage unit 150.

### (2) Input information

The area notification system 100 uses various kinds of data input to the input unit 120 in order to determine the method of using the facility 10. Next, main data that can be input to the input unit 120 from the outside will be described in detail.

### (2-1) Operation information

The operation information is information on a use situation of the facility 10. The operation information is dynamic information that varies depending on the timing of input to the input unit 120. The operation information is specifically information on the following items.
- Operation information of the air conditioning system 20
- Use information of the area A
- Environmental tolerance information of the user U
- Use information of the user U

The operation information of the air conditioning system 20 is real-time information on the operation data of the air conditioning system 20. The operation information of the air conditioning system 20 is, for example, the operation time of the heat source unit 21 and the utilization unit 23, as well as the set temperature, the set humidity, and the set air volume of the area A.

The use information of the area A is real-time information on the user U using each area A. The use information of the area A is, for example, the number of users U using each area A, a use time, and a use purpose.

The environmental tolerance information of the user U is information on a temperature range, a humidity range, an air volume range, and an air cleanliness range of the area A that can be tolerated by the user U in the area A. The air cleanliness range is, for example, a range of carbon dioxide concentration. The environmental tolerance information of the user U may be set for each time zone.

The use information of the user U is real-time information on the area A used by each user U. The use information of the user U is, for example, information on a use situation of the facility 10.

The operation information of the air conditioning system 20, the use information of the area A, and the use information of the user U are automatically input from, for example, the centralized controller 26 of the air conditioning system 20. The input operation information is stored in the storage unit 150.

The environmental tolerance information of the user U is input by the user U using the facility terminal 30 or the like, for example. Alternatively, when the area notification system 100 cooperates with an SNS system used by the user U, the input unit 120 may acquire the environmental tolerance information of the user U via the SNS system. In this case, the user U logs in to the SNS system with his/her account and inputs his/her environmental tolerance information, and the input unit 120 acquires the environmental tolerance information input by the user U. In addition, the user U may input his/her environmental tolerance information by using an application dedicated to the area notification system 100 installed in his/her portable terminal. In this case, the input unit 120 acquires the environmental tolerance information input by the user U.

### (2-2) Thermal environment information

Thermal environment information is information on the environment of the area A and weather information. The information on the environment of the area A is, for example, the temperature, the humidity, the air volume, and the air cleanliness of the area A. The air cleanliness is, for example, carbon dioxide concentration. For example, the thermal environment information is acquired in real time by a sensor installed in the area A, and is automatically input to the input unit 120. The input thermal environment information is stored in the storage unit 150. The information on the environment of the area A may be an estimated value calculated based on data acquired in the past.

The weather information is information on the environment of the region where the facility 10 is located. The weather information is, for example, the temperature, the humidity, the amount of solar radiation, the wind direction, and the air volume of the region where the facility 10 is located. The weather information is dynamic information that varies depending on the timing of input to the input unit 120. The weather information is automatically input from an external network 34 such as a weather forecast service, for example.

### (2-3) Building information

Building information is mainly information on a building including the facility 10 and information on a space in the facility 10. The building information is static information with a low update frequency. The building information is specifically information on the following items.
- Layout of the facility 10
- Ventilation volume of the facility 10
- Internal calorific value of OA equipment installed in the facility 10
- Materials of walls, doors, windows, and the like in the facility 10

The layout of the facility 10 includes, for example, a floor plan of rooms in the facility 10 and an air-conditioned area (floor area) of each area A (room). The ventilation volume of the facility 10 includes, for example, the ventilation volume of each area A (room).

The building information is input by, for example, a builder of the facility 10 and a manager of the area notification system 100 using the facility terminal 30 or the like. The manager of the area notification system 100 is, for example, a sales representative who proposes installation of the area notification system 100 and an engineer who is in charge of installation of the area notification system 100. The building information input to the input unit 120 is stored in the storage unit 150.

### (2-4) Equipment drawing information

Equipment drawing information is mainly information on installation of the air conditioning system 20 in the facility 10. The equipment drawing information is static information with a low update frequency. In the case of the air conditioning system 20 of a direct expansion-type in which the utilization unit 23 performs heat exchange between the refrigerant and the air in the area A that is the air conditioning target space, the equipment drawing information is specifically information on the following items.
- Refrigerant system
- Refrigerant pipe length
- Arrangement of the heat source unit 21 and the utilization unit 23

When only one air conditioning system 20 is used as in the present embodiment, there is only one refrigerant system, and therefore information on the refrigerant system is not used.

The information on the arrangement of the heat source unit 21 and the utilization unit 23 includes installation information that associates the utilization unit 23 with the area A in which the utilization unit 23 is installed. The utilization unit 23 installed in each area A can be identified by the installation information.

In the case of the air conditioning system 20 of an indirect expansion-type in which the medium (air, water, and the like) heat-exchanged with the refrigerant is transferred to the area A that is the air conditioning target space, the equipment drawing information is specifically information on the following items.
- Duct system
- Water piping system

The equipment drawing information is input by, for example, the builder of the air conditioning system 20 and the manager of the area notification system 100 using the facility terminal 30 or the like. The equipment drawing information input to the input unit 120 is stored in the storage unit 150.

### (2-5) Device performance characteristic information

Device performance characteristic information is information on the performance characteristics of the devices included in the air conditioning system 20. The device performance characteristic information is, for example, the capacity and rotational speed of the compressor of the heat source unit 21, the rotational speed of the fan of the heat source unit 21, and the rotational speed of the fan of the utilization unit 23.

The device performance characteristic information is input by, for example, the builder of the air conditioning system 20 and the manager of the area notification system 100 using the facility terminal 30 or the like. The equipment drawing information input to the input unit 120 is stored in the storage unit 150.

### (3) Output information

The area notification system 100 outputs various kinds of information included in the method of using the facility 10 determined by the control unit 110 to the outside via the output unit 130 and the setting unit 140.

The information output to the outside via the output unit 130 is, for example, information on the area A (first area) to be used by the user U of the facility 10. This information is transmitted from the area notification system 100 to the facility terminal 30 or the like. As a result, the guide of the facility 10 is notified of the method of using the facility 10 by the area notification system 100. The guide of the facility 10 guides the user U to the predetermined area A to be used by the user U, by referring to the information transmitted from the output unit 130 and displayed on the screen of the facility terminal 30. The information output to the outside via the output unit 130 may be transmitted to a user terminal 32 in addition to the facility terminal 30 or instead of the facility terminal 30. The user terminal 32 is a PC, a portable terminal, or the like used by the user U of the facility 10. In this case, the area notification system 100 notifies the user U of the method of using the facility 10. The user U can refer to the information transmitted from the output unit 130 and displayed on the screen of the user terminal 32 and move to the predetermined area A to be used by the user U.

The information output to the outside via the setting unit 140 is information used for controlling the air conditioning system 20, such as a control signal for the air conditioning system 20. The information output to the outside via the setting unit 140 includes, for example, information on the utilization unit 23 to be operated among the plurality of utilization units 23 of the air conditioning system 20, and information on the set temperature, the set humidity, the set air volume, and the like of the utilization unit 23 installed in each area A. These pieces of information are transmitted from the area notification system 100 to the centralized controller 26 of the air conditioning system 20. The centralized controller 26 controls the heat source unit 21 and the utilization unit 23 based on the information received from the area notification system 100.

### (4) Process of determining method of using facility 10

The control unit 110 uses a machine learning method to determine the method of using the facility 10. Specifically, as illustrated in Fig. 3, the control unit 110 executes the following steps S11 to S13 to generate the information on the method of using the facility 10.
- Step S11: A plurality of patterns of operation information of the air conditioning system 20 acquired when the plurality of utilization units 23 are used in a plurality of areas A in a first period and power consumption of the air conditioning system 20 in the first period are learned in association with each other.
- Step S12: Based on the result of the learning in step S11, from a plurality of patterns of operation information of the air conditioning system 20 acquired when the plurality of utilization units 23 are used in the plurality of areas A in a second period different from the first period, the power consumption of the air conditioning system 20 in the second period is inferred for each of the plurality of patterns.
Step S13: Based on a comparison among the results of the inference in step S12 for the plurality of respective patterns, information on the area A to be used by the users U is generated so that power consumption of the air conditioning system 20 is reduced.

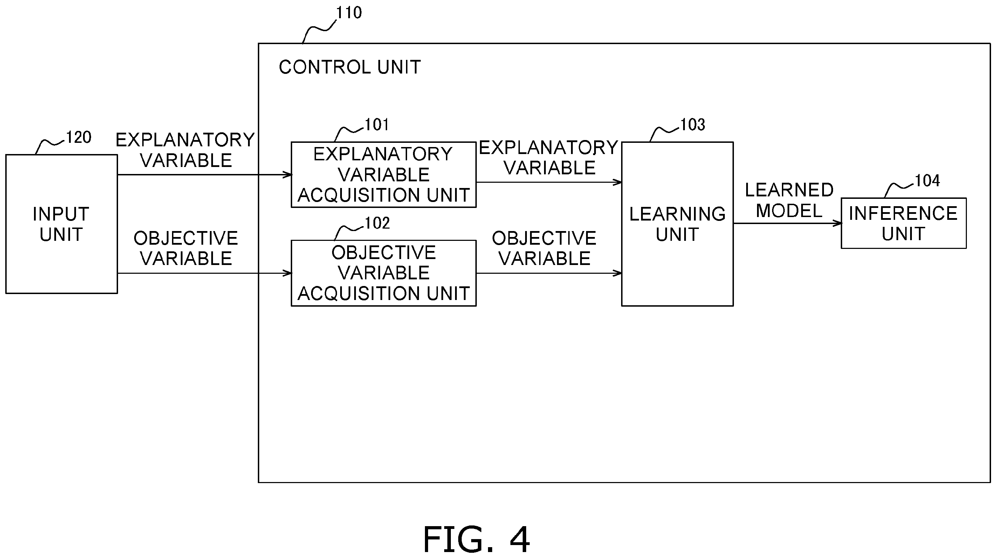

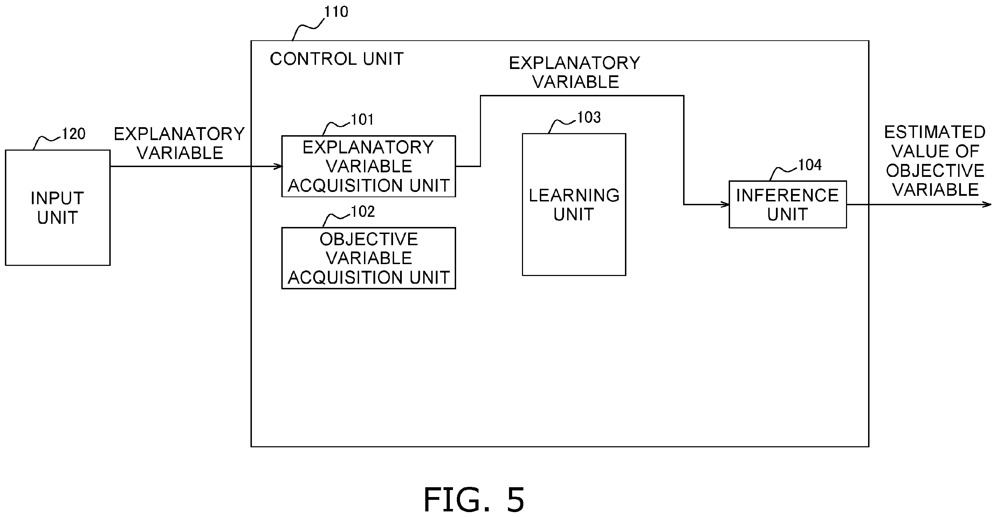

Fig. 4 is a block diagram of the control unit 110 in step S11. Fig. 5 is a block diagram of the control unit 110 in step S12. The control unit 110 mainly includes an explanatory variable acquisition unit 101, an objective variable acquisition unit 102, a learning unit 103, and an inference unit 104. These elements of the control unit 110 correspond to functions realized by the CPU of the control unit 110 executing a program stored in the storage unit 150.

The explanatory variable acquisition unit 101 acquires explanatory variables used for the learning in step S11 and explanatory variables used for the inference in step S12. The explanatory variable acquisition unit 101 acquires data input to the input unit 120 as an explanatory variable. The candidates of the explanatory variables are the operation information, the thermal environment information, the building information, the equipment drawing information, and the device performance characteristic information. The explanatory variables include at least the use information of the area A included in the operation information.

In order to improve the accuracy of the learning, the explanatory variable acquisition unit 101 may further acquire operation information of the air conditioning system 20 included in the operation information, as the explanatory variable. In addition, in order to further improve the accuracy of the learning, the explanatory variable acquisition unit 101 may further acquire at least one of the environmental tolerance information of the user U and the use information of the user U included in the operation information, as the explanatory variable.

The objective variable acquisition unit 102 acquires an objective variable used for the learning in step S11. The objective variable acquisition unit 102 acquires, as the objective variable, at least the power consumption of the air conditioning system 20. The power consumption of the air conditioning system 20 is the total power consumption of the devices included in the air conditioning system 20. The power consumption of the air conditioning system 20 includes, for example, the power consumption of the heat source unit 21 and the power consumption of the utilization unit 23. The centralized controller 26 of the air conditioning system 20 measures and acquires the power consumption of the air conditioning system 20. The objective variable acquisition unit 102 acquires the power consumption of the air conditioning system 20, which is an objective variable input to the input unit 120 via the centralized controller 26.

As illustrated in Fig. 4, in step S11, the learning unit 103 learns the explanatory variable acquired by the explanatory variable acquisition unit 101 and the objective variable acquired by the objective variable acquisition unit 102 in association with each other. The explanatory variable used for the learning is a plurality of patterns of the operation information of the air conditioning system 20 acquired by the explanatory variable acquisition unit 101 when the plurality of utilization units 23 are used in the plurality of areas A in the first period. The plurality of patterns of the operation information are various patterns of the use information of the area A. An example of the patterns of the operation information is the arrangement of the areas A used by the users U and the number of users U using each area A. The objective variable used for the learning is the power consumption of the air conditioning system 20 in the first period, which is acquired by the objective variable acquisition unit 102.

As described above, in the present embodiment, the learning unit 103 learns each of the plurality of patterns of the operation information of the air conditioning system 20 and the power consumption of the air conditioning system 20 under the condition of the pattern in association with each other. **In** other words, the learning unit 103 learns the power consumption in a case where each device of the air conditioning system 20 consumes power in various operation patterns over a predetermined period in the first period in association with the operation patterns. The learning unit 103 outputs a learned model, which is a result of the learning. The learning unit 103 transmits the learned model to the inference unit 104.

As illustrated in Fig. 5, in step S12, the inference unit 104 infers the objective variable by calculating an estimated value of the objective variable from the explanatory variable acquired by the explanatory variable acquisition unit 101 based on the learned model obtained as a result of the learning by the learning unit 103. The explanatory variable used for the inference is a plurality of patterns of the operation information of the air conditioning system 20 acquired by the explanatory variable acquisition unit 101 when the plurality of utilization units 23 are used in the plurality of areas A in the second period different from the first period.

As described above, in the present embodiment, the inference unit 104 infers, based on the learned model, the power consumption of the air conditioning system 20 under the condition of each of the plurality of patterns of the operation information, which is the explanatory variable acquired by the explanatory variable acquisition unit 101, and calculates the estimated value of the power consumption. In other words, the inference unit 104 calculates the estimated value of the power consumption of the air conditioning system 20 in a case where each of the plurality of areas A that can be used by the user U is used, based on the learning result. The control unit 110 stores, as a result of the inference, each pattern of the operation information of the air conditioning system 20 and the estimated value of the power consumption of the air conditioning system 20 corresponding to each pattern in the storage unit 150 in association with each other.

In step S13, the control unit 110 generates information on the area A to be used by the user U so that power consumption of the air conditioning system 20 is reduced, based on a comparison among the results of the inference for the plurality of respective patterns of the operation information of the air conditioning system 20. For example, the control unit 110 selects a pattern having the smallest estimated value of the power consumption of the air conditioning system 20 from the plurality of patterns of the operation information acquired in step S12. Next, the control unit 110 generates information on the area A to be used by the user U based on the selected pattern. For example, the control unit 110 generates the location of the area A to be used by each user U, the maximum number of users U who can use each area A, and the like. As described above, in the present embodiment, the control unit 110 performs the comparison among a plurality of results of the inference to provide a notification of the area A to be used by the user U so that power consumption of the air conditioning system 20 is reduced.

### (5) Effects

The area notification system 100 of the present embodiment can optimize the overall operation efficiency of the air conditioning system 20 that performs air conditioning over the plurality of areas A. Specifically, the area notification system 100 can use a machine learning method to determine the area A to be used by the user U with which the power consumption of the entire air conditioning system 20 is reduced. The air conditioning system 20 controls the heat source unit 21 and the utilization unit 23 based on the method of using the facility 10 determined by the area notification system 100. Thus, the air conditioning management system 190 using the area notification system 100 can efficiently perform energy-saving control for reducing the power consumption of the air conditioning system 20.

### (6) Modifications

Modifications of the present embodiment will be described below. Some or all of the contents of each modification may be combined with the contents of another modification as long as they do not contradict each other.

### (6-1) Modification A

The explanatory variable acquisition unit 101 may further acquire thermal environment information in the first period as the explanatory variable used for the learning in step S11. In this case, the learning unit 103 further learns the thermal environment information in the first period and the power consumption of the air conditioning system 20 in the first period in association with each other. For example, the learning unit 103 learns both of the plurality of patterns of the operation information of the air conditioning system 20 in the first period and the thermal environment information in association with the power consumption of the air conditioning system 20 in the first period. Thus, the area notification system 100 can improve the accuracy of learning in which the plurality of patterns of the operation information of the air conditioning system 20 and the power consumption of the air conditioning system 20 are associated with each other.

### (6-2) Modification B

The explanatory variable acquisition unit 101 may further acquire at least one of the building information, the equipment drawing information, and the device performance characteristic information, as the explanatory variable used for the learning in step S11. In this case, the learning unit 103 further learns at least one of the building information, the equipment drawing information, and the device performance characteristic information in association with the power consumption of the air conditioning system 20 in the first period. For example, the learning unit 103 learns both of the plurality of patterns of the operation information of the air conditioning system 20 in the first period and the building information in association with the power consumption of the air conditioning system 20 in the first period. Thus, the area notification system 100 can improve the accuracy of learning in which the plurality of patterns of the operation information of the air conditioning system 20 and the power consumption of the air conditioning system 20 are associated with each other.

### (6-3) Modification C

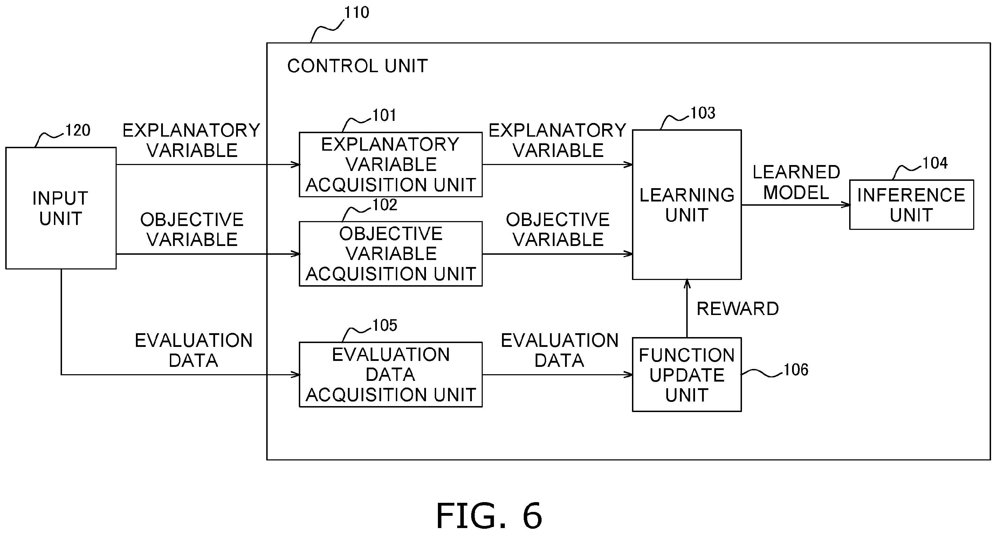

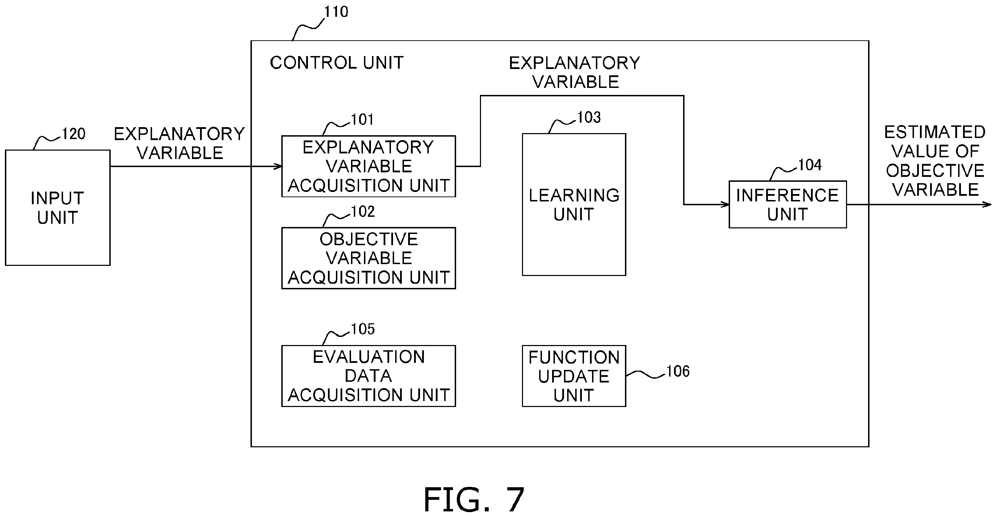

The control unit 110 may perform reinforcement learning in which learning is performed using a reward. In this case, as illustrated in FIGS. 6 and 7, the control unit 110 further includes an evaluation data acquisition unit 105 and a function update unit 106.

The evaluation data acquisition unit 105 acquires evaluation data for evaluating the control result of the air conditioning system 20. In the present modification, the evaluation data includes at least the power consumption of the air conditioning system 20. The evaluation data acquisition unit 105 acquires evaluation data input to the input unit 120 via the centralized controller 26.

The function update unit 106 calculates a reward based on the evaluation data acquired by the evaluation data acquisition unit 105. Specifically, the function update unit 106 calculates a higher reward for smaller power consumption of the air conditioning system 20 included in the evaluation data.

The learning unit 103 updates the learning state using the reward calculated by the function update unit 106, and outputs the learned model.

In the present modification, the area notification system 100 can improve the accuracy of learning in which the plurality of patterns of the operation information of the air conditioning system 20 and the power consumption of the air conditioning system 20 are associated with each other.

### -Second embodiment-

The basic configuration and operation of an area notification system 100 of the present embodiment are the same as those of the area notification system 100 of the first embodiment. Specifically, the descriptions of "(1) Overall configuration of area notification system 100" and " (3) Output information" in the first embodiment are applicable to the present embodiment. Hereinafter, differences between the present embodiment and the first embodiment will be described.

### (1) Input information

In the present embodiment, operation information, weather information, power consumption information, and use suitability determination information are main data that can be input to the input unit 120 from the outside. The operation information and the weather information are the same as those described in the first embodiment.

The power consumption information includes the power consumption of the air conditioning system 20 described in the first embodiment. The centralized controller 26 of the air conditioning system 20 measures and acquires the power consumption of the air conditioning system 20. The power consumption information is input to the input unit 120 via the centralized controller 26.

The use suitability determination information is an index for evaluating the adequateness between the area A and the user U from the viewpoints of economic efficiency, comfort, and convenience. The use suitability determination information includes at least one of economic efficiency information, comfort information, and convenience information, which will be described below.

The economic efficiency information includes information on the operation cost of the air conditioning system 20. The information on the operation cost of the air conditioning system 20 is, for example, the power consumption of the air conditioning system 20. The power consumption of the air conditioning system 20 may be a value measured by the centralized controller 26, or may be an estimated value calculated based on a past measured value.

The comfort information includes at least one of information on the environment of the plurality of areas A and information on a tolerable range of the user U regarding the environment of the plurality of areas A. Specifically, the comfort information includes at least one of the thermal environment information of the area A and the environmental tolerance information of the user U. The thermal environment information of the area A and the environmental tolerance information of the user U are the same as those described in the first embodiment. The thermal environment information of the area A may be a value measured by the centralized controller 26 or may be an estimated value calculated based on a past measured value. The environmental tolerance information of the user U may be input by the user U as in the first embodiment.

The convenience information includes at least one of information on the use of the plurality of areas A and information on a tolerable range of the user U regarding the use of the plurality of areas A. Specifically, the convenience information includes at least one of attribute information of the area A and use tolerance information of the user U.

The attribute information of the area A is, for example, information on the capacity, use, location, equipment, communication environment, and power supply environment of the area A. The information on the capacity of the area A is the maximum number of users U who can use the area A. The information on the location of the area A is, for example, information on the floor plan of the area A. The information on the equipment of the area A is, for example, the internal calorific value of the OA equipment installed in the area A. The attribute information of the area A is input by, for example, a builder of the facility 10 and a manager of the area notification system 100 using the facility terminal 30 or the like.

The use tolerance information of the user U is information on a method of using the area A tolerable by the user U in the area A. The use tolerance information of the user U is, for example, information on a tolerable range of the user U regarding the number of users, use, location, equipment, communication environment, and power supply environment of the area A. The use tolerance information of the user U may be input by the user U as in the first embodiment.

### (2) Process of determining method of using facility 10

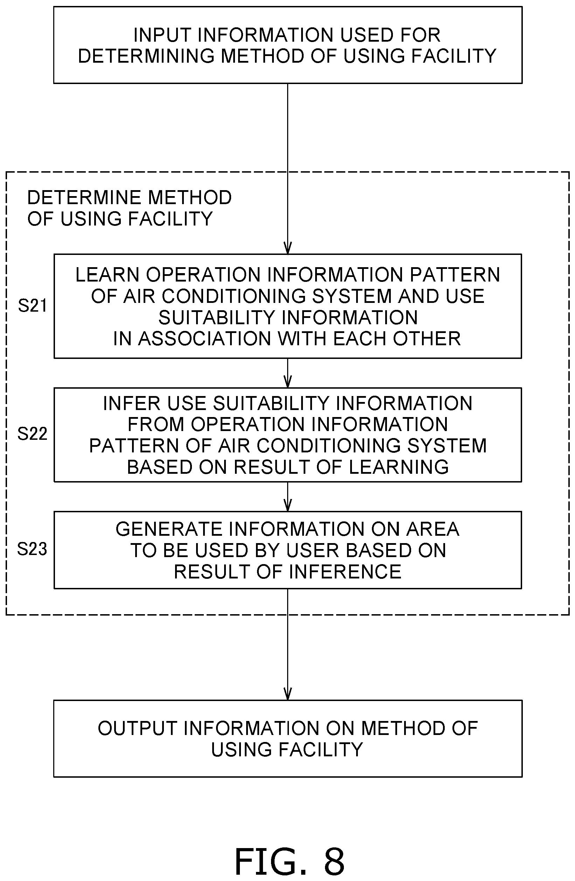

The control unit 110 uses a machine learning method to determine the method of using the facility 10. Specifically, as illustrated in Fig. 8, the control unit 110 executes the following steps S21 to S23, to generate information on the method of using the facility 10.
- Step S21: A plurality of patterns of operation information of the air conditioning system 20 acquired when the plurality of utilization units 23 are used in the plurality of areas A in the first period and information (use suitability information) on suitability of use of an area included in the plurality of areas A in the first period are learned in association with each other.
   Step S22: Based on the result of the learning in step S21, from the plurality of patterns of operation information of the air conditioning system 20 acquired when the plurality of utilization units 23 are used in the plurality of areas A in the second period different from the first period, information (use suitability information) on suitability of use of an area included in the plurality of areas A in the second period is inferred for each of the plurality of patterns.
- Step S23: Based on a comparison among the results of the inference in step S22 for the plurality of respective patterns, information on the area A to be used by the users U including the most appropriate area among the plurality of areas A is generated.

Fig. 4 is a block diagram of the control unit 110 in step S21. Fig. 5 is a block diagram of the control unit 110 in step S22. The control unit 110 mainly includes the explanatory variable acquisition unit 101, the objective variable acquisition unit 102, the learning unit 103, and the inference unit 104. These elements of the control unit 110 correspond to functions realized by the CPU of the control unit 110 executing a program stored in the storage unit 150.

The explanatory variable acquisition unit 101 acquires explanatory variables used for the learning in step S21 and explanatory variables used for the inference in step S22. The explanatory variable acquisition unit 101 acquires data input to the input unit 120 as an explanatory variable. The candidates of the explanatory variable are the operation information, the weather information, the power consumption information, and the use suitability determination information. The explanatory variable includes at least the use information of the area A included in the operation information.

In order to improve the accuracy of the learning, the explanatory variable acquisition unit 101 may further acquire operation information of the air conditioning system 20 included in the operation information, as the explanatory variable. In addition, in order to further improve the accuracy of the learning, the explanatory variable acquisition unit 101 may further acquire at least one of the environmental tolerance information of the user U and the use information of the user U included in the operation information, as the explanatory variable.

The objective variable acquisition unit 102 acquires an objective variable used for the learning in step S21. The objective variable acquisition unit 102 acquires, as the objective variable, at least information on the suitability of use of an area included in the plurality of areas A (use suitability information). The use suitability information is obtained by quantifying the suitability of the use of the area A. For example, the use suitability information is a value obtained by quantifying each item included in the economic efficiency information, the comfort information, and the convenience information described above and weighting each item according to a predetermined priority. Hereinafter, a higher value of the use suitability information indicates a higher suitability of use of the area A by the user U. In this case, the centralized controller 26 of the air conditioning system 20 may calculate the use suitability information, and the objective variable acquisition unit 102 may acquire the use suitability information, which is the objective variable input to the input unit 120 via the centralized controller 26.

As illustrated in Fig. 4, in step S21, the learning unit 103 learns the explanatory variable acquired by the explanatory variable acquisition unit 101 and the objective variable acquired by the objective variable acquisition unit 102 in association with each other. The explanatory variable used for the learning is a plurality of patterns of the operation information of the air conditioning system 20 acquired by the explanatory variable acquisition unit 101 when the plurality of utilization units 23 are used in the plurality of areas A in the first period. The plurality of patterns of the operation information are various patterns of the use information of the area A. An example of the patterns of the operation information is the arrangement of the areas A used by the users U and the number of users U using each area A. The objective variable used for the learning is the use suitability information acquired by the objective variable acquisition unit 102.

As described above, in the present embodiment, the learning unit 103 learns each of the plurality of patterns of the operation information of the air conditioning system 20 and the use suitability information under the condition of the pattern in association with each other. In other words, the learning unit 103 learns the use suitability information when each device of the air conditioning system 20 is operated in various operation patterns over a predetermined period in the first period in association with the operation patterns. The learning unit 103 outputs a learned model, which is a result of the learning. The learning unit 103 transmits the learned model to the inference unit 104.

As illustrated in Fig. 5, in step S22, the inference unit 104 infers the objective variable by calculating an estimated value of the objective variable from the explanatory variable acquired by the explanatory variable acquisition unit 101 based on the learned model obtained as a result of the learning by the learning unit 103. The explanatory variable used for the inference is a plurality of patterns of the operation information of the air conditioning system 20 acquired by the explanatory variable acquisition unit 101 when the plurality of utilization units 23 are used in the plurality of areas A in the second period different from the first period.

As described above, in the present embodiment, the inference unit 104 infers, based on the learned model, the use suitability information under the condition of each of the plurality of patterns of the operation information, which is the explanatory variable acquired by the explanatory variable acquisition unit 101, and calculates the estimated value of the use suitability information. In other words, the inference unit 104 calculates the estimated value of the use suitability information in a case where each of the plurality of areas A that can be used by the user U is used, based on the learning result. The control unit 110 stores, as a result of the inference, each pattern of the operation information of the air conditioning system 20 and the estimated value of the use suitability information corresponding to each pattern in the storage unit 150 in association with each other.

In step S23, the control unit 110 generates information on the area A to be used by the user U so that estimated value of the use suitability information is increased, based on a comparison among the results of the inference for the plurality of respective patterns of the operation information of the air conditioning system 20. For example, the control unit 110 selects a pattern having the largest estimated value of the use suitability information from the plurality of patterns of the operation information acquired in step S22. Next, the control unit 110 generates information on the area A to be used by the user U including the most appropriate area among the plurality of areas A based on the selected pattern. For example, the control unit 110 generates the location of the area A to be used by each user U, the maximum number of users U who can use each area A, and the like. As described above, in the present embodiment, the control unit 110 performs the comparison among a plurality of results of the inference to provide a notification of the area A to be used by the user U so that value of the use suitability information is increased.

### (3) Effects

The area notification system 100 of the present embodiment can optimize the overall operation efficiency of the air conditioning system 20 that performs air conditioning over the plurality of areas A. Specifically, the area notification system 100 can use a machine learning method to determine the area A to be used by the user U with which the value of the use suitability information increases. The air conditioning system 20 controls the heat source unit 21 and the utilization unit 23 based on the method of using the facility 10 determined by the area notification system 100. Thus, the air conditioning management system 190 using the area notification system 100 can efficiently perform energy-saving control for reducing the power consumption of the air conditioning system 20.

### (4) Modifications

Modifications of the present embodiment will be described below. Some or all of the contents of each modification may be combined with the contents of another modification as long as they do not contradict each other.

### (4-1) Modification D

The explanatory variable acquisition unit 101 may further acquire power consumption information in the first period as the explanatory variable used for the learning in step S21. In this case, the learning unit 103 further learns the power consumption information in the first period in association with the use suitability information in the first period. For example, the learning unit 103 learns both of the plurality of patterns of the operation information of the air conditioning system 20 in the first period and the power consumption information in association with the use suitability information in the first period. Thus, the area notification system 100 can improve the accuracy of learning in which the plurality of patterns of the operation information of the air conditioning system 20 and the use suitability information are associated with each other.

### (4-2) Modification E

The explanatory variable acquisition unit 101 may further acquire use suitability determination information in the first period as the explanatory variable used for the learning in step S21. In this case, the learning unit 103 further learns the use suitability determination information in the first period in association with the use suitability information in the first period. For example, the learning unit 103 learns both of the plurality of patterns of the operation information of the air conditioning system 20 in the first period and the use suitability determination information in association with the use suitability information in the first period. Thus, the area notification system 100 can improve the accuracy of learning in which the plurality of patterns of the operation information of the air conditioning system 20 and the use suitability information are associated with each other.

### -Modifications-

Modifications of the embodiment will be described below. Some or all of the contents of each modification may be combined with the contents of another modification as long as they do not contradict each other.

### (1) Modification F

In the first and the second embodiments, the air conditioning management system 190 using the area notification system 100 may include a plurality of the air conditioning systems 20. In this case, in the facility 10 in which the area notification system 100 is used, the plurality of air conditioning systems 20 for adjusting the air environment (temperature, humidity, air volume, and the like) of the plurality of areas A are installed. Each air conditioning system 20 includes one refrigeration cycle (refrigerant system) in which the plurality of utilization units 23 are connected to one heat source unit 21. Therefore, a plurality of refrigerant systems are installed in the facility 10. The refrigerant systems are independent of each other.

Each air conditioning system 20 can perform air conditioning of the facility 10 over the plurality of areas A in the facility 10. However, the plurality of air conditioning systems 20 do not perform air conditioning of a common area A. In other words, the areas A air-conditioned by the respective air conditioning systems 20 do not overlap with each other.

The area notification system 100 is used to perform control based on the overall operation efficiency of the plurality of air conditioning systems 20 installed over the plurality of areas A. For example, as in the first embodiment, the area notification system 100 uses a machine learning method to determine the area A to be used by the user U with which the power consumption of each air conditioning system 20 is reduced. As in the second embodiment, the area notification system 100 uses a machine learning method to determine the area A to be used by the user U with which the value of the use suitability information increases.

The area notification system 100 of the present modification can optimize the overall operation efficiency of the plurality of air conditioning systems 20 that perform air conditioning over the plurality of areas A. Each air conditioning system 20 controls the heat source unit 21 and the utilization unit 23 based on the method of using the facility 10 determined by the area notification system 100. Thus, the air conditioning management system 190 using the area notification system 100 can efficiently perform energy-saving control for reducing the power consumption of the plurality of air conditioning systems 20.

### (2) Modification G

In the first and the second embodiments, the air conditioning management system 190 using the area notification system 100 may include an air conditioning system 20 that transfers heat using air and water as a medium. In this case, in the facility 10 in which the area notification system 100 is used, one air conditioning system 20 for adjusting the air environment (temperature, humidity, air volume, and the like) of the plurality of areas A is installed. The air conditioning system 20 includes one refrigeration cycle (refrigerant system) in which a plurality of the utilization units 23 are connected to one heat source unit 21. Therefore, one refrigerant system is installed in the facility 10.

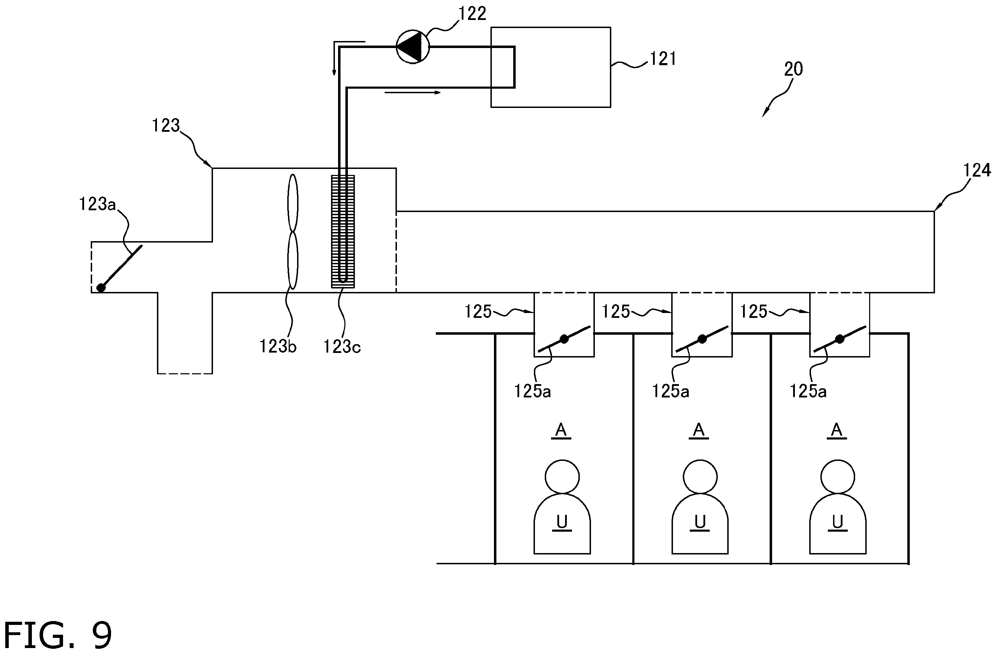

In the present modification, the air conditioning system 20 transfers heat using air and water as a medium. As illustrated in Fig. 9, the air conditioning system 20 mainly includes a chiller 121, a secondary pump 122, an air handling unit (AHU) 123 a duct 124, and variable air volume units (VAVs) 125. The heat source unit 21 is a unit mainly including the chiller 121, the secondary pump 122, the AHU 123, and the duct 124. The utilization units 23 are the VAVs 125. One VAV 125 is installed in each area A in the facility 10. The AHU 123 sends out air the temperature of which has been adjusted to the VAV 125 in each area A. The VAV 125 supplies air the temperature of which has been adjusted to the area A.

Similarly to the outdoor unit 22 of the first embodiment, the chiller 121 includes a compressor that compresses the refrigerant circulating in the refrigeration cycle. The chiller 121 adjusts the temperature of the heat transfer medium through heat exchange with the refrigerant circulating in the refrigeration cycle. The heat transfer medium is a liquid that passes and circulates through the chiller 121 and the AHU 123. In the present modification, the heat transfer medium is water.

The water the temperature of which has been adjusted by the chiller 121 is sent to the AHU 123 by the secondary pump 122. The AHU 123 includes an outside air damper 123a, a blower fan 123b, and a heat-exchanger coil 123c. The AHU 123 takes in air from outdoors and indoors, and sends the air to the heat-exchanger coil 123c, by driving the blower fan 123b. The AHU 123 can adjust the amount of air taken in from the outdoors by adjusting the opening degree of the outside air damper 123a. The heat-exchanger coil 123c performs heat exchange between the air taken in from the outdoors and indoors and the water sent from the chiller 121. The AHU 123 sends the air the temperature of which has been adjusted through the heat exchange by the heat-exchanger coil 123c, to the duct 124. The duct 124 is connected to the VAV 125 in each area A. The air flowing through the duct 124 is sent to each area A via the VAV 125. As a result, the air the temperature of which has been adjusted by the AHU 123 is supplied to each area A. The VAV 125 includes an air supply damper 125a for adjusting the air volume supplied to the area A. The VAV 125 has a controller for acquiring the opening degree of the air supply damper 125a and setting the opening degree of the air supply damper 125a to a predetermined value.

The air conditioning system 20 of the present modification performs air conditioning control and ventilation control. The air conditioning control is control for adjusting the amount of air required for processing the air conditioning load of each area A. In the air conditioning control, the control unit 110 adjusts the opening degree of the air supply damper 125a of each VAV 125 according to the air conditioning load of each area A, to adjust the amount of air supplied to each area A (air supply amount). The ventilation control is control for adjusting the amount of air required to achieve the ventilation volume of each area A. In the ventilation control, the control unit 110 adjusts the amount of outside air (outside air amount) introduced into the AHU 123 by adjusting the opening degree of the outside air damper 123a. The control unit 110 can acquire and set the opening degrees of the outside air damper 123a and the air supply damper 125a and the performance (the number of rotations) of the blower fan 123b. The control unit 110 can start or stop the operation of the VAV 125. The opening degree of the air supply damper 125a of the VAV 125 in the active state after the start of operation is larger than zero. The opening degree of the air supply damper 125a of the VAV 125 in the inactive state due to the operation being stopped is zero.

**In** the present modification, the equipment drawing information is specifically information on the following items.
- System of the duct 124
- System of pipes for water to circulate in the chiller 121 and the AHU 123
- Arrangement of the chiller 121, the AHU 123, and the VAVs 125
- Performance characteristics of devices such as the chiller 121, the secondary pump 122, the AHU 123, and the VAVs 125

The area notification system 100 is used to perform control based on the overall operation efficiency of the air conditioning system 20 installed over a plurality of areas A. For example, as in the first embodiment, the area notification system 100 uses a machine learning method to determine the area A to be used by the user U with which the power consumption of the air conditioning system 20 is reduced. As in the second embodiment, the area notification system 100 uses a machine learning method to determine the area A to be used by the user U with which the value of the use suitability information increases.

The area notification system 100 of the present modification can optimize the overall operation efficiency of the air conditioning system 20 that performs air conditioning over the plurality of areas A. The air conditioning system 20 controls the opening degrees of the outside air damper 123a and the air supply damper 125a and the performance of the blower fan 123b based on the method of using the facility 10 determined by the area notification system 100. Thus, the air conditioning management system 190 using the area notification system 100 can efficiently perform energy-saving control for reducing the power consumption of the air conditioning system 20.

As described in Modification F, also in the present modification, the air conditioning management system 190 using the area notification system 100 may include the plurality of air conditioning systems 20.

### (3) Modification H

In the first and the second embodiments, the air conditioning management system 190 using the area notification system 100 may include the plurality of air conditioning systems 20 that transfer heat using water as a medium. In this case, in the facility 10 in which the area notification system 100 is used, the plurality of air conditioning systems 20 for adjusting the air environment (temperature, humidity, air volume, and the like) of the plurality of areas A are installed. Each air conditioning system 20 includes one refrigeration cycle (refrigerant system) in which the plurality of utilization units 23 are connected to one heat source unit 21. Therefore, a plurality of refrigerant systems are installed in the facility 10. The refrigerant systems are independent of each other.

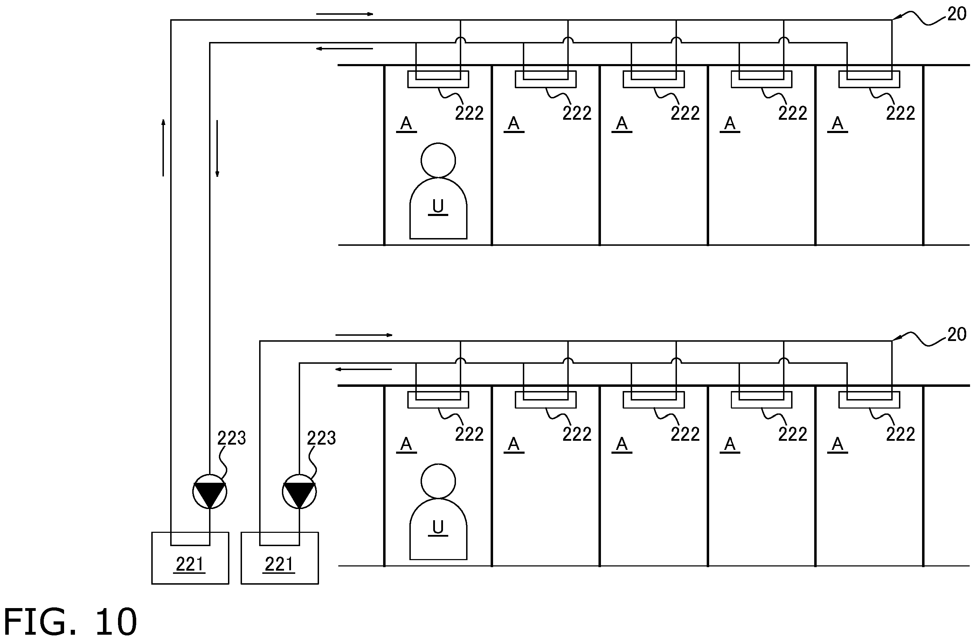

In the present modification, the air conditioning system 20 transfers heat using water as a medium. As illustrated in Fig. 10, the air conditioning system 20 mainly includes a chiller 221, fan coil units (FCUs) 222 and a secondary pump 223. In each air conditioning system 20, a plurality of FCUs 222 are connected to one chiller 221. The heat source unit 21 is a unit mainly including the chiller 221 and the secondary pump 223. The utilization units 23 are the FCUs 222. One FCU 222 is installed in each area A in the facility 10.

Similarly to the chiller 121 in Modification G, the chiller 221 includes a compressor that compresses the refrigerant circulating in the refrigeration cycle. The chiller 221 adjusts the temperature of the heat transfer medium by heat exchange with the refrigerant circulating in the refrigeration cycle. The heat transfer medium is a liquid that passes and circulates through the chiller 221 and the FCUs 222. In the present modification, the heat transfer medium is water.

The water the temperature of which has been adjusted by the chiller 221 is sent to each FCU 222 by the secondary pump 223. The FCU 222 mainly includes a coil and a fan. The coil of the FCU 222 performs heat exchange between the air taken in from the area A and the water sent from the chiller 221. The fan of the FCU 222 returns the air taken in from the area A and then has had the temperature adjusted by the coil, to the area A. Each FCU 222 further includes a valve provided in a pipe through which the water sent from the chiller 221 flows. The valve of the FCU 222 is, for example, an electromagnetic valve. No heat exchange takes place in the FCU 222 the valve of which is closed. The heat exchange takes place in the FCU 222 the valve of which is open. The valve of the FCU 222 in the active state is open.

Each air conditioning system 20 can perform air conditioning of the facility 10 over the plurality of areas A in the facility 10. However, the plurality of air conditioning systems 20 do not perform air conditioning of a common area A. In other words, the areas A air-conditioned by the respective air conditioning systems 20 do not overlap with each other.

The area notification system 100 is used to perform control based on the overall operation efficiency of the plurality of air conditioning systems 20 installed over the plurality of areas A. For example, as in the first embodiment, the area notification system 100 uses a machine learning method to determine the area A to be used by the user U with which the power consumption of the air conditioning system 20 is reduced. As in the second embodiment, the area notification system 100 uses a machine learning method to determine the area A to be used by the user U with which the value of the use suitability information increases.

The area notification system 100 of the present modification can optimize the overall operation efficiency of the plurality of air conditioning systems 20 that perform air conditioning over the plurality of areas A. Each air conditioning system 20 controls the performance of the chiller 221 and the secondary pump 223 based on the method of using the facility 10 determined by the area notification system 100. Thus, the air conditioning management system 190 using the area notification system 100 can efficiently perform energy-saving control for reducing the power consumption of the plurality of air conditioning systems 20.

### (4) Modification I

In the first and the second embodiments, the environmental tolerance information of the user U included in the operation information may include information on a demand event participation condition. The demand event participation condition is a condition for the user U to participate in demand control of a type allowing the participation of the user U.

When the information on the demand event participation condition of the user U is included as the environmental tolerance information of the user U, the area notification system 100 may give an incentive to the user U. In this case, the area notification system 100 may output information on the incentive to be given to the user U participating in the demand control to the outside via the output unit 130 and the setting unit 140. For example, after the user U participates in the demand control, the area notification system 100 may give points usable in an SNS system used by the user U to the user U via the SNS system after the end of the demand control.

### (5) Modification J

In the first and the second embodiments, the area notification system 100 may be used as an energy management support tool. In this case, for example, an energy management consultant presents a proposal regarding improvement of energy management of the facility 10 to a customer by using the area notification system 100.

In the present modification, the area notification system 100 uses a machine learning method to determine the method of using the facility 10 with which the power consumption of the air conditioning system 20 is reduced. Alternatively, the area notification system 100 uses a machine learning method to determine the method of using the facility 10 with which the value of the use suitability information increases. The consultant presents a proposal regarding a method of using the facility 10 to the customer based on the information output to the output unit 130.

### (6) Modification K

In the first and the second embodiments, the area notification system 100 may be used to manage a schedule related to the use of the facility 10. For example, the area notification system 100 may allocate an available area A to the user U based on the status of reservation for use of the areas A in the facility 10 and control the air conditioning system 20 based on the schedule. In this case, the information input to the input unit 120 includes reservation information. The reservation information is information on the reservation for the use of the area A. The reservation information includes, for example, information on the user U who has made the reservation for the use of the area A and information on the desired use time zone of the area A. When the area notification system 100 cooperates with an area reservation system, the user U may perform, for example, input, change, cancellation, and the like of the reservation information using the area reservation system.

In the present modification, the area notification system 100 uses a machine learning method to determine, based on the reservation information, schedule information with which the power consumption of the air conditioning system 20 is reduced. Alternatively, the area notification system 100 uses a machine learning method to determine, based on the reservation information, schedule information with which the value of the use suitability information increases. The schedule information includes, for example, information on the location of the area A to be used by the user U who has made the reservation for the use of the area A and the available time zone of the area A. The area notification system 100 outputs the determined schedule information to the outside via the output unit 130 and the setting unit 140. Further, the area notification system 100 may control the air conditioning system 20 based on the schedule information.

### REFERENCE SIGNS LIST

10 Facility
20 Air conditioning system (first air conditioning system)
21 Heat source unit
23 Utilization unit
100 Area notification system
110 Control unit
A Area
U User

### CITATION LIST

### PATENT LITERATURE

[Patent Document 1] JP 2013-246702 A

## Claims

1. An area notification system (100) configured to notify a user (U1, U2, ...) of a facility (10), of a first area to be used by the user among a plurality of areas (A1, A2, ...) in the facility, the area notification system comprising
a control unit (110) configured to generate information on the first area, in the facility where air conditioning is performed over the plurality of areas by a first air conditioning system (20) in which a plurality of utilization units (23) are connected to one heat source unit (21), wherein
the control unit
learns a plurality of patterns of operation information of the first air conditioning system acquired when the plurality of utilization units are used in the plurality of areas in a first period, and power consumption of the first air conditioning system in the first period in association with each other,
based on a result of the learning, infers, for each of the plurality of patterns, the power consumption of the first air conditioning system in a second period from the plurality of patterns acquired when the plurality of utilization units are used in the plurality of areas in the second period, and
based on a comparison among results of the inference for each of the plurality of respective patterns, generates the information on the first area so that power consumption of the first air conditioning system is reduced,
the plurality of patterns including arrangement of the plurality of areas used by the user and number of the user using each of the plurality of areas.

2. The area notification system according to claim 1, wherein the operation information includes information on use of the plurality of areas.

3. The area notification system according to claim 2, wherein the operation information further includes information on operation data of the first air conditioning system.

4. The area notification system according to any one of claims 1 to 3, wherein the control unit further learns information on an environment of the plurality of areas in the first period and the power consumption of the first air conditioning system in the first period in association with each other.

5. The area notification system according to any one of claims 1 to 4, wherein the control unit further learns information on the facility and the power consumption of the first air conditioning system in the first period in association with each other.

6. The area notification system according to any one of claims 1 to 5, wherein the control unit
calculates a reward based on the power consumption of the first air conditioning system in the first period, and
learns the power consumption of the first air conditioning system in the first period based on the reward calculated.

7. An area notification system (100) configured to notify a user (U1, U2, ...) of a facility (10), of a first area to be used by the user among a plurality of areas (A1, A2, ...) in the facility, the area notification system comprising
a control unit (110) configured to generate information on the first area, in the facility where air conditioning is performed over the plurality of areas by a first air conditioning system (20) in which a plurality of utilization units (23) are connected to one heat source unit (21), wherein
the control unit
learns a plurality of patterns of operation information of the first air conditioning system acquired when the plurality of utilization units are used in the plurality of areas in a first period, and information on suitability of use of an area included in the plurality of areas in the first period in association with each other,
based on a result of the learning, infers, for each of the plurality of patterns, information on suitability of use of an area included in the plurality of areas in a second period from the plurality of patterns acquired when the plurality of utilization units are used in the plurality of areas in the second period, and
generates the information on the first area including a most appropriate area among the plurality of areas, based on a comparison among results of the inference for each of the plurality of respective patterns,
the plurality of patterns including arrangement of the plurality of areas used by the user and number of the user using each of the plurality of areas.

8. The area notification system according to claim 7, wherein the operation information includes information on use of the plurality of areas.

9. The area notification system according to claim 8, wherein the operation information further includes information on operation data of the first air conditioning system.

10. The area notification system according to any one of claims 7 to 9, wherein the control unit further learns the power consumption of the first air conditioning system in the first period and information on suitability of use of the first area in the first period in association with each other.

11. The area notification system according to any one of claims 7 to 10, wherein the control unit further learns determination information for determining suitability of use of the first area in the first period and information on suitability of use of the first area in the first period in association with each other.

12. The area notification system according to claim 11, wherein the determination information includes economic efficiency information, comfort information, or convenience information,
the economic efficiency information includes information on an operation cost of the first air conditioning system,
the comfort information includes information on an environment of the plurality of areas, or information on a tolerable range of the user regarding the environment of the plurality of areas, and
the convenience information includes information on use of the plurality of areas or information on a tolerable range of the user regarding the use of the plurality of areas.

## Patentansprüche

1. Gebietsbenachrichtigungssystem (100), das konfiguriert ist, um einen Nutzer (U1, U2, ...) einer Einrichtung (10) über ein erstes Gebiet zu benachrichtigen, das von dem Nutzer unter einer Vielzahl von Gebieten (A1, A2, ...) in der Einrichtung benutzt werden soll, wobei das Gebietsbenachrichtigungssystem Folgendes umfasst
eine Steuereinheit (110), die konfiguriert ist, um Informationen über das erste Gebiet in der Einrichtung zu generieren, in der die Klimatisierung über die Vielzahl von Gebieten durch ein erstes Klimatisierungssystem (20) durchgeführt wird, in der eine Vielzahl von Nutzungseinheiten (23) mit einer Wärmequelleneinheit (21) verbunden sind, wobei
die Steuereinheit
eine Vielzahl von Mustern von Betriebsinformationen des ersten Klimatisierungssystems, die erfasst werden, wenn die Vielzahl von Nutzungseinheiten in der Vielzahl von Gebieten in einem ersten Zeitraum benutzt werden, und den Stromverbrauch des ersten Klimatisierungssystems in dem ersten Zeitraum in gegenseitiger Assoziation lernt, auf Grundlage eines Ergebnisses des Lernens, für ein jedes der Vielzahl von Mustern, den Stromverbrauch des ersten Klimatisierungssystems in einem zweiten Zeitraum aus der Vielzahl von Mustern folgert, die erfasst werden, wenn die Vielzahl von Nutzungseinheiten in der Vielzahl von Gebieten in dem zweiten Zeitraum benutzt werden, und auf Grundlage eines Vergleichs zwischen den Ergebnissen der Schlussfolgerung für ein jedes der Vielzahl von jeweiligen Mustern die Informationen über das erste Gebiet generiert, so dass der Stromverbrauch des ersten Klimatisierungssystems reduziert wird,
wobei die Vielzahl von Mustern eine Anordnung der Vielzahl von Gebieten, die von dem Nutzer benutzt werden, und die Anzahl der Nutzer, die ein jedes der Vielzahl von Gebieten benutzen, einschließt.

2. Gebietsbenachrichtigungssystem nach Anspruch 1, wobei die Betriebsinformationen Informationen über die Verwendung der Vielzahl von Gebieten einschließen.

3. Gebietsbenachrichtigungssystem nach Anspruch 2, wobei die Betriebsinformationen ferner Informationen über Betriebsdaten des ersten Klimatisierungssystems einschließen.

4. Gebietsbenachrichtigungssystem nach einem der Ansprüche 1 bis 3, wobei die Steuereinheit ferner Informationen über eine Umgebung der Vielzahl von Gebieten in dem ersten Zeitraum und den Stromverbrauch des ersten Klimatisierungssystems in dem ersten Zeitraum in gegenseitiger Assoziation lernt.

5. Gebietsbenachrichtigungssystem nach einem der Ansprüche 1 bis 4, wobei die Steuereinheit ferner Informationen über die Einrichtung und den Stromverbrauch des ersten Klimatisierungssystems in dem ersten Zeitraum in gegenseitiger Assoziation lernt.

6. Gebietsbenachrichtigungssystem nach einem der Ansprüche 1 bis 5, wobei die Steuereinheit eine Belohnung auf Grundlage des Stromverbrauchs des ersten Klimatisierungssystems in dem ersten Zeitraum berechnet, und
den Stromverbrauch des ersten Klimatisierungssystems in dem ersten Zeitraum auf Grundlage der berechneten Belohnung lernt.

7. Gebietsbenachrichtigungssystem (100), das konfiguriert ist, um einen Nutzer (U1, U2, ...) einer Einrichtung (10) über ein erstes Gebiet zu benachrichtigen, das von dem Nutzer unter einer Vielzahl von Gebieten (A1, A2, ...) in der Einrichtung benutzt werden soll, wobei das Gebietsbenachrichtigungssystem Folgendes umfasst
eine Steuereinheit (110), die konfiguriert ist, um Informationen über das erste Gebiet in der Einrichtung zu generieren, in der die Klimatisierung über die Vielzahl von Gebieten durch ein erstes Klimatisierungssystem (20) durchgeführt wird, in der eine Vielzahl von Nutzungseinheiten (23) mit einer Wärmequelleneinheit (21) verbunden sind, wobei die Steuereinheit
eine Vielzahl von Mustern von Betriebsinformationen des ersten Klimatisierungssystems, die erfasst werden, wenn die Vielzahl von Nutzungseinheiten in der Vielzahl von Gebieten in einem ersten Zeitraum benutzt werden, und Informationen über die Eignung für die Nutzung eines in der Vielzahl von Gebieten enthaltenen Gebiets in dem ersten Zeitraum in gegenseitiger Assoziation lernt,
auf der Grundlage eines Ergebnisses des Lernens für ein jedes der Vielzahl von Mustern, Informationen über die Eignung für die Nutzung eines in der Vielzahl von Gebieten enthaltenen Gebiets in einem zweiten Zeitraum aus der Vielzahl von Mustern folgert, die erfasst werden, wenn die Vielzahl von Nutzungseinheiten in der Vielzahl von Gebieten in dem zweiten Zeitraum benutzt wird, und
die Informationen über das erste Gebiet, das ein am besten geeignetes Gebiet unter der Vielzahl von Gebieten enthält, auf Grundlage eines Vergleichs zwischen Ergebnissen der Schlussfolgerung für ein jedes der Vielzahl von jeweiligen Mustern generiert,
wobei die Vielzahl von Mustern eine Anordnung der Vielzahl von Gebieten, die von dem Nutzer benutzt werden, und die Anzahl der Nutzer, die ein jedes der Vielzahl von Gebieten benutzen, einschließt.

8. Gebietsbenachrichtigungssystem nach Anspruch 7, wobei die Betriebsinformationen Informationen über die Verwendung der Vielzahl von Gebieten einschließen.

9. Gebietsbenachrichtigungssystem nach Anspruch 8, wobei die Betriebsinformationen ferner Informationen über Betriebsdaten des ersten Klimatisierungssystems einschließen.

10. Gebietsbenachrichtigungssystem nach einem der Ansprüche 7 bis 9, wobei die Steuereinheit ferner den Stromverbrauch des ersten Klimatisierungssystems in dem ersten Zeitraum und Informationen über die Eignung für die Nutzung des ersten Gebiets in dem ersten Zeitraum in gegenseitiger Assoziation lernt.

11. Gebietsbenachrichtigungssystem nach einem der Ansprüche 7 bis 10, wobei die Steuereinheit ferner Bestimmungsinformationen zum Bestimmen der Eignung für die Nutzung des ersten Gebiets in dem ersten Zeitraum und Informationen über die Eignung für die Nutzung des ersten Gebiets in dem ersten Zeitraum in gegenseitiger Assoziation lernt.

12. Gebietsbenachrichtigungssystem nach Anspruch 11, wobei die Bestimmungsinformationen Wirtschaftlichkeitsinformationen, Komfortinformationen oder Bequemlichkeitsinformationen einschließen,
die Wirtschaftlichkeitsinformationen Informationen über Betriebskosten des ersten Klimatisierungssystems einschließen,
die Komfortinformationen Informationen über eine Umgebung der Vielzahl von Gebieten oder Informationen über eine tolerierbare Reichweite des Nutzers in Bezug auf die Umgebung der Vielzahl von Gebieten einschließen, und
die Bequemlichkeitsinformationen Informationen über die Nutzung der Vielzahl von Gebieten oder Informationen über eine tolerierbare Reichweite des Nutzers in Bezug auf die Nutzung der Vielzahl von Gebieten einschließen.

## Revendications

1. Système de notification de zone (100) configuré pour notifier à un utilisateur (U1, U2, ...) d'une installation (10) une première zone à utiliser par l'utilisateur parmi une pluralité de zones (A1, A2, ...) dans l'installation, le système de notification de zone comprenant
une unité de commande (110) configurée pour générer des informations sur la première zone, dans l'installation où la climatisation est effectuée sur la pluralité de zones par un premier système de climatisation (20) dans lequel une pluralité d'unités d'utilisation (23) sont reliées à une unité de source de chaleur (21), dans lequel
l'unité de commande
apprend une pluralité de modèles d'informations de fonctionnement du premier système de climatisation, acquis lorsque la pluralité d'unités d'utilisation sont utilisées dans la pluralité de zones au cours d'une première période, et la consommation d'énergie du premier système de climatisation au cours de la première période en association les uns avec les autres,
sur la base d'un résultat de l'apprentissage, déduit, pour chacun des modèles de la pluralité de modèles, la consommation d'énergie du premier système de climatisation au cours d'une seconde période à partir de la pluralité de modèles acquis lorsque la pluralité d'unités d'utilisation sont utilisées dans la pluralité de zones au cours de la deuxième période, et
sur la base d'une comparaison parmi les résultats de la déduction pour chacun des modèles de la pluralité de modèles respectifs, génère les informations sur la première zone de manière à réduire la consommation d'énergie du premier système de climatisation,
la pluralité de modèles incluant la disposition de la pluralité de zones utilisées par l'utilisateur et le nombre d'utilisateurs utilisant chacune des zones de la pluralité de zones.

2. Système de notification de zone selon la revendication 1, dans lequel les informations de fonctionnement incluent des informations sur l'utilisation de la pluralité de zones.

3. Système de notification de zone selon la revendication 2, dans lequel les informations de fonctionnement incluent en outre des informations sur les données de fonctionnement du premier système de climatisation.

4. Système de notification de zone selon l'une quelconque des revendications 1 à 3, dans lequel l'unité de commande apprend en outre des informations sur un environnement de la pluralité de zones au cours de la première période et la consommation d'énergie du premier système de climatisation au cours de la première période en association les unes avec les autres.

5. Système de notification de zone selon l'une quelconque des revendications 1 à 4, dans lequel l'unité de commande apprend en outre des informations sur l'installation et la consommation d'énergie du premier système de climatisation au cours de la première période en association les unes avec les autres.

6. Système de notification de zone selon l'une quelconque des revendications 1 à 5, dans lequel l'unité de commande calcule une récompense sur la base de la consommation d'énergie du premier système de climatisation au cours de la première période, et
apprend la consommation d'énergie du premier système de climatisation au cours de la première période sur la base de la récompense calculée.

7. Système de notification de zone (100) configuré pour notifier à un utilisateur (U1, U2, ...) d'une installation (10) une première zone à utiliser par l'utilisateur parmi une pluralité de zones (A1, A2, ...) dans l'installation, le système de notification de zone comprenant
une unité de commande (110) configurée pour générer des informations sur la première zone, dans l'installation
où la climatisation est effectuée sur la pluralité de zones par un premier système de climatisation (20) dans lequel une pluralité d'unités d'utilisation (23) sont reliées à une unité de source de chaleur (21), dans lequel
l'unité de commande
apprend une pluralité de modèles d'informations de fonctionnement du premier système de climatisation, acquis lorsque la pluralité d'unités d'utilisation sont utilisées dans la pluralité de zones au cours d'une première période, et des informations sur l'adéquation d'utilisation d'une zone incluse dans la pluralité de zones au cours de la première période en association les uns avec les autres,
sur la base d'un résultat de l'apprentissage, déduit, pour chacun des modèles de la pluralité de modèles, des informations sur l'adéquation d'utilisation d'une zone incluse dans la pluralité de zones au cours d'une seconde période à partir de la pluralité de modèles acquis lorsque la pluralité d'unités d'utilisation sont utilisées dans la pluralité de zones au cours de la seconde période, et
génère les informations sur la première zone, incluant une zone la plus appropriée parmi la pluralité de zones, sur la base d'une comparaison entre les résultats de la déduction pour chacun des modèles de la pluralité de modèles respectifs,
la pluralité de modèles incluant la disposition de la pluralité de zones utilisées par l'utilisateur et le nombre d'utilisateurs utilisant chacune des zones de la pluralité de zones.

8. Système de notification de zone selon la revendication 7, dans lequel les informations de fonctionnement incluent des informations sur l'utilisation de la pluralité de zones.

9. Système de notification de zone selon la revendication 8, dans lequel les informations de fonctionnement incluent en outre des informations sur les données de fonctionnement du premier système de climatisation.

10. Système de notification de zone selon l'une quelconque des revendications 7 à 9, dans lequel l'unité de commande apprend en outre la consommation d'énergie du premier système de climatisation au cours de la première période et les informations sur l'adéquation d'utilisation de la première zone au cours de la première période en association les unes avec les autres.

11. Système de notification de zone selon l'une quelconque des revendications 7 à 10, dans lequel l'unité de commande apprend en outre des informations de détermination pour déterminer l'adéquation d'utilisation de la première zone au cours de la première période et des informations sur l'adéquation d'utilisation de la première zone au cours de la première période en association les unes avec les autres.

12. Système de notification de zone selon la revendication 11, dans lequel les informations de détermination incluent des informations sur l'efficacité économique, des informations sur le confort ou des informations sur la commodité,
les informations sur l'efficacité économique incluent des informations sur le coût de fonctionnement du premier système de climatisation,
les informations sur le confort incluent des informations sur un environnement de la pluralité de zones ou des informations sur une plage tolérable de l'utilisateur concernant l'environnement de la pluralité de zones, et
les informations sur la commodité incluent des informations sur l'utilisation de la pluralité de zones ou des informations sur une plage tolérable de l'utilisateur concernant l'utilisation de la pluralité de zones.
